# EUROPÄISCHE PATENTSCHRIFT

(11) **EP 0 743 469 B1**
(45) Veröffentlichungstag und Bekanntmachung des Hinweises auf die Patenterteilung: **10.01.2001**
(21) Anmeldenummer: 96105532.4
(22) Anmeldetag: 09.04.1996
(51) Int. Cl.: F16D 65/16, B60T 17/08

(54) **Bremszuspannvorrichtung**
Brake actuator
Moteur de frein

(30) Priorität: 19.05.1995 DE 19518513
(43) Veröffentlichungstag der Anmeldung: 20.11.1996
(73) Patentinhaber: KNORR-BREMSE Systeme für Nutzfahrzeuge GmbH, 80809 München (DE)
(72) Erfinder: Baumgartner, Hans, 85368 Moosburg (DE); Bieker, Dieter, 83064 Raubling (DE); Hirschler, Klaus, 72669 Beuren (DE); Fischer, Rudolf, 85435 Erding (DE); Trimpe, Robert, 82140 Olching-Esting (DE)
(74) Vertreter: Specht, Peter, Dipl.-Phys.

(56) Entgegenhaltungen:
- EP-A- 0 012 024
- EP-A- 0 740 085
- DE-A- 3 245 773
- DE-C- 4 212 382
- FR-A- 2 331 717
- US-A- 3 802 539

## Beschreibung

Die vorliegende Erfindung bezieht sich auf eine Bremszuspannvorrichtung gemäß dem Oberbegriff des Anspruches 1.

Bremszuspannvorrichtungen der gattungsgemäßen Art werden insbesondere für solche Nutz- und Schienenfahrzeuge verwendet, die mit einer Druckluft-Bremsanlage ausgerüstet sind, wobei der genaue Aufbau derartiger Bremszuspannvorrichtungen in zahlreichen Druckschriften näher beschrieben sind. Als Beispiel sei in diesem Zusammenhang auf die DE 42 12 382 A1 der Anmelderin verwiesen, die eine einen Bremszylinder aufweisende Bremszuspannvorrichtung offenbart, die zur Betätigung bzw. zum Zuspannen einer Scheibenbremse vorgesehen ist.

Ein Bremszuspannvorrichtung mit den Merkmalen des Oberbegriffes, bei der zudem die Kolbenstange lösbar am Kolbenteller befestigbar ist, ist aus der nachveröffentlichten EP 0 740 085A1 bekannt.

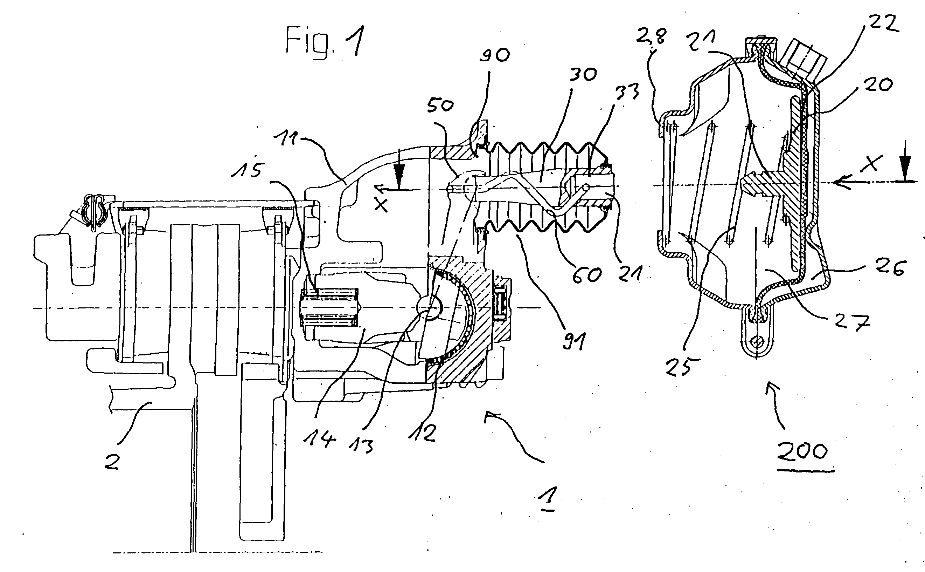

Wie aus der Fig. 1 hervorgeht, weist ein in der Zeichnung rechts im nicht angeflanschten Zustand gezeigter Bremszylinder 200 einer solchen Zuspannvorrichtung eine Memb-ran 22 auf, die auf ihrer einen Seite über Druckluft in einer bestimmten, in den Figuren mit X bezeichneten Betätigungsrichtung so beaufschlagt wird, daß sie sich in dieser Richtung bewegt. An der anderen Seite der Membran 22 liegt ein Kolbenteller 20 an, in dessen Zentrum eine in der Betätigungsrichtung des Bremszylinders 200 verlaufende Ansatz 21 vorgesehen ist, der mit seinem dem Kolbenteller abgewandten Ende in eine Ausnehmung 33 einer Kolbenstange 30 eingeführt wird, die ihrerseits ein Bremszuspannelement 50 betätigt. Beispielsweise handelt es sich bei der eingangs genannten DE 42 12 382 A1, deren Zuspannvorrichtung in Fig. 1 schematisch gezeigt ist, bei diesem Bremszuspannelement um einen Drehhebel 50, der an einem Halbschalenlager 12 der Zuspannvorrichtung 1 exzentrisch gelagert ist und über eine Exzenterwelle 13 eine Traverse 14 in Richtung zu einer Bremsscheibe 2 verschiebt. Zwischen der Bremsscheibe 2 und dem unteren Ende der Traverse 14 ist eine Bremsbacke vorgesehen. Die Traverse 14 wird auf ihrer Unterseite von einer Feder 15 derart beaufschlagt, daß die Traverse 14 von der Bremsscheibe 2 weggedrückt wird; der Drehhebel 50 kehrt daher selbsttätig in seine in der Fig. 1 gezeigt Ausgangslage zurück, wenn der Bremsdruck abgebaut wird.

In vielen Fällen und so auch bei der Zuspannvorrichtung der DE 42 12 382 A1 wird die Membran 22 des Bremszylinders 200 zusätzlich von einem (nicht gezeigten) Feststell-Bremselement beaufschlagt, um im Falle eines Druckluftausfalls oder zum Parken die Bremse ebenfalls betätigen zu können. Derartige Feststell-Bremselemente sind meist als Federspeicherkolben ausgebildet, wobei der Kolben in der Mitte der Membran so aufliegt, daß seine Achse mit der der Kolbenstange 30 übereinstimmt.

Das von der Kolbenstange 30 betätigte Bremszuspannelement - bzw. im Falle der aus der vorstehend erwähnten DE 42 12 382 A1 bekannten Zuspannvorrichtung der Drehhebel - beschreibt im Laufe seiner Betätigung durch die Kolbenstange 30 eine von der eigentlichen Betätigungsrichtung X abweichende, etwa kreisausschnittsförmige Bahn, die bei voller Bremsbetätigung von der Betätigungsrichtung X relativ stark abweicht. Aufgrund der Flexibilität der Membran 22 wird die sichere Funktion der Zuspannvorrichtung 1 hierdurch im Normalfall nicht beeinflußt, da es die Membran 22 der Kolbenstange 30 und dem mit dieser verbundenen Kolbenteller 20 ermöglicht, seitlich zu kippen bzw. eine etwa schräge Lage einzunehmen.

Wenn die die Traverse 14 beaufschlagende Feder 15 bricht oder durch andere Einflüsse wie durch Korrosion oder Verklemmung daran gehindert wird, ihre Federkraft auf die Traverse 14 aufzubringen, kehrt der Drehhebel 50 nicht mehr selbsttätig in seine in der Fig. 1 gezeigte Ausgangslage zurück, wenn der Bremsdruck wieder abgebaut wird; der Drehhebel 50 verbleibt vielmehr in einer undefinierten Zwischenlage. Andererseits wird die Kolbenstange 30 weiterhin von einer in dem Bremszylinder 200 befindlichen Feder 25 beaufschlagt, so daß sie in dem genannten Fall außer Eingriff mit dem Drehhebel 50 gerät und schließlich in ihre Ausgangslage zurückkehrt. Da der Drehhebel 50 in der undefinierten Zwischenlage aufgrund der erwähnten gekrümmten Betätigungsbahn nunmehr einen Angriffspunkt aufweist, der nicht auf der Linie der Betätigungseinrichtung X liegt, besteht in einem solchen Fall die Gefahr, daß die Kolbenstange 30 bei der nächsten Bremsbetätigung entweder gar nicht oder aber in unzureichendem Maße mit dem Drehhebel 50 in Eingriff gerät. Wenn dies geschieht, ist damit zu rechnen, daß auf den Bremshebel 50 keine oder zumindest keine ausreichende Bremskraft aufgebracht werden kann, so daß ein Bremsversagen nicht ausschließen ist.

Aus der EP-A-0 012 024 ist es bekannt, die Kolbenstange eines Bremszylinders lösbar am Bremszuspannelement mittels einer Verschraubung anzubringen, wobei die Öffnung der Bremszuspannvorrichtung beim Abnehmen des Membranzylinders von der Bremszuspannvorrichtung mittels eines Faltenbalges und einer Abdeckplatte verschlossen wird. Auf diese Weise wird zwar beim Abnehmen des Bremszylinders von der Bremszuspannvorrichtung das Eindringen von Schmutz in dieselbe verhindert. Der Aufbau ist jedoch relativ kompliziert und teuer und wird daher den Anforderungen an eine preisgünstige Bremskonstruktion bei gleichzeitiger hoher Funktionssicherheit gegen Verschmutzung nicht gerecht.

Aus der DE-A-32 45 773 ist eine Teilbelag-Scheibenbremse bekannt, welche eine Bremszuspannvorrichtung enthält, bei welcher ein Bügel ein Kugelpfannengelenk festhält.

Aus der FR-A-2 331 717 ist eine gattungsgemäße Bremszuspannvorrichtung bekannt, bei der die Kolbenstange eines Bremszylinders gelenkig an einem Hebel zur Zuspannung der Bremse betätigt ist. Der Bremszylinder ist relativ umständlich mittels einer Schraubenanordnung einer Bremszuspannvorrichtung befestigt. Beim Abnehmen des Bremszylinders ist nicht sichergestellt, daß die Bremszuspannvorrichtung durch eindringenden Schmutz in der Funktion beeinträchtigt wird.

Der Erfindung liegt die Aufgabe zugrunde, eine Bremszuspannvorrichtung gemäß dem Oberbegriff des Anspruches 1 derart weiterzuentwickeln, daß die Zuspannvorrichtung im demontierten Zustand des Bremszylinders durch eine unkomplizierte konstruktive Maßnahme gegen Verunreinigungen sicher geschützt wird.

Diese Aufgabe wird durch die im Kennzeichnungsteil des Anspruches 1 angegebenen Maßnahmen gelöst.

Dadurch, daß die Kolbenstange so ausgebildet ist, daß sie gelenkig am Drehhebel befestigt werden kann, wird im Falle eines Versagens der die Traverse beaufschlagenden Feder erreicht, daß das Bremszuspannelement in Form des Drehhebels nicht außer Eingriff mit der Kolbenstange gerät. Der Drehhebel wird vielmehr von der mit ihm gekoppelten Kolbenstange unter Einwirkung der Feder des Bremszylinders stets sicher in seine Ausgangslage zurückgebracht. Ein auf eine unzureichende Kopplung von Kolbenstange und Drehhebel zurückzuführendes Bremsversagen kann daher sicher verhindert werden, so daß die Zuverlässigkeit der Bremszuspannvorrichtung weiter erhöht werden kann. Da die erfindungsgemäße Kopplung zudem mit wenig Aufwand realisiert werden kann, wird dieser Sicherheitszugewinn mit nur geringen bzw. nahezu vernachlässigbaren Mehrkosten erkauft.

Gemäß der Erfindung ist vorgesehen, die Kolbenstange weiterhin so auszubilden, daß sie lösbar am Kolbenteller befestigt werden kann, und zwar beispielsweise dadurch, daß in der Kolbenstange eine runde Ausnehmung ausgebildet wird, in die ein stiftförmiger Ansatz des Kolbentellers eingeführt werden kann. Mit dieser Maßnahme ist es nämlich möglich, diejenige Öffnung, über die die Kolbenstange in das Gehäuse der Bremszuspannvorrichtung eintaucht, um das Bremszuspannelement zu beaufschlagen, mittels eines Faltenbalgs abzudichten, der einerseits am Umfang der Öffnung und andererseits an dem dem Bremszuspannelement abgewandten Ende der Kolbenstange befestigt ist. Auch im demontierten Zustand des Bremszylinders wird mit dieser Maßnahme sicher verhindert, daß irgendwelche Verunreinigungen oder Nässe in das Innere der Zuspannvorrichtung eindringen. Die empfindlichen Teile der Zuspannvorrichtung sind somit stets zuverlässig geschützt, so daß die Gefahr eines Bremsversagens infolge einer Korrosion der beweglichen Teile der Zuspannvorrichtung weiter herabgesetzt wird.

Ein besonderer Vorteil der erfindungsgemäßen Konstruktion liegt darin, daß dadurch, daß die Kolbenstange direkt und unmittelbar lösbar am Kolbenteller befestigt wird, der eigentliche Aufbau der Bremszuspannvorrichtung und des Bremszylinders nicht unnötig verkompliziert wird. Anders als bei dem Stand der Technik der EP 0 012 024 wird auch eine mehrteilige Ausbildung der Kolbenstange des Bremszylinders mit einem Abschnitt am Bremszylinder und einem Abschnitt in der Zuspannvorrichtung vermieden.

Um die Montage und insbesondere die im Falle einer Wartung ggf. erforderliche Demontage zu erleichtern, ist es gemäß der Erfindung von Vorteil, wenn die Kolbenstange lösbar am Bremszuspannelement befestigt werden kann. Wenn - wie dies in der Praxis häufig der Fall ist - die Kolbenstange an ihrem Ende halbkugelförmig ausgebildet ist und zur Bildung eines Kugelpflannengelenks in eine entsprechende halbkugelförmige Ausnehmung des Bremszuspannelements eingreift, kann eine solche lösbare gelenkige Verbindung auf einfache und preiswerte Weise dadurch gebildet werden, daß die Kolbenstange mittels eines Klemmbügels am Bremszuspann-element befestigt wird; um Herstellungstoleranzen auszugleichen, ist dieser Klemmbügel vorzugsweise ein Federbügel.

Ein derartiger Klemmbügel wird vorzugsweise dadurch befestigt, daß an der Kolbenstange oder am Bremszuspannelement stiftförmige Vorsprünge ausgebildet werden, in denen der Klemmbügel schwenkbar gelagert wird, während im jeweils anderen Teil (d.h. im Bremszuspannelement bzw. in der Kolbenstange) eine vorzugsweise umlaufend ausgebildete Ausnehmung vorgesehen wird, in die ein als Klemmelement ausgebildetes Teil des Klemmbügels einrasten kann. Sowohl die Montage als auch die Demontage kann somit mit einfachsten Mitteln durchgeführt werden.

Die Erfindung wird nachstehend anhand der Beschreibung von Ausführungsbeispielen unter Bezugnahme auf die Zeichnung näher erläutert. Es zeigen:
- Figur 1: anhand einer Teil-Querschnittsansicht durch eine Zuspannvorrichtung 10 und durch einen Bremszylinder 200 ein erstes Ausführungsbeispiel der Erfindung;
- Figur 2A und 2B: anhand von Querschnittsansichten ein zweites Ausführungsbeispiel der Erfindung;
- Figur 3a: anhand einer Querschnittsansicht durch den Bremszylinder 200 ein drittes Ausführungsbeispiel der Erfindung, wobei in den Fig. 3B und 3C vergrößerte Ansichten von Bereichen B bzw. C der Fig.3A gezeigt sind; und
- **Fig.4**: anhand einer Querschnittsansicht durch den Bremszylinder 200 ein viertes Ausführungsbeispiel der Erfindung.

In Fig.1 ist eine erfindungsgemäße Zuspannvorrichtung 1 gezeigt, und zwar in einem Zustand, in dem ein zugehöriger Bremszylinder 200 von ihr demontiert ist. Gemäß Fig.1 weist der Bremszylinder 200 eine untere bzw. linke Kammer 27 und eine obere bzw. rechte Kammer 26 auf. Zwischen der unteren und der oberen Kammer ist eine flexible Membran 22 in bekannter Weise so eingespannt, daß die beiden Kammern hermetisch bzw. druckluftdicht voneinander getrennt sind. In der oberen Kammer 26 ist neben einer (nicht gezeigten) Zuführvorrichtung für Druckluft ein Feststell-Bremselement angeordnet, das in an sich bekannter Weise aus einem Federspeicher und einem von diesem betätigten Kolben gebildet ist, der in der Mitte der Membran 22 so aufliegt, daß seine Achse mit der mit X bezeichneten Betätigungsachse des Bremszylinders 200 übereinstimmt. Wenn über die DruckluftZuführvorrichtung Druckluft in die obere Kammer 26 eingeleitet wird oder wenn der Kolben vom Federspeicher betätigt wird, wird die Membran 22 in der Betätigungsrichtung X nach unten bzw. links bewegt.

An der der oberen Kammer 26 abgewandten Seite der Membran 22, d.h. an der der unteren Kammer 27 zugewandten Seite, liegt ein Kolbenteller 20 an der Membran 22 an. Im Zentrum des Kolbentellers 20 sitzt ein Ansatz 21, der genau in der Betätigungsrichtung X des Bremszylinders 200 verläuft. Das dem Kolbenteller 20 abgewandte bzw. einem Bremszuspannelement in Form eines Drehhebels 50 zugewandte Ende des Ansatzes 21 ist so ausgebildet, daß es genau in eine runde Ausnehmung bzw. Bohrung 33 einer Kolbenstange 30 paßt und mit dieser auf eine später beschriebene Weise gekoppelt werden kann. Die Kolbenstange 30 ragt durch eine Öffnung 90 des Gehäuses 11 der Zuspannvorrichtung 1. Am Umfang der Öffnung 90 ist ein Faltenbalg 91 eingespannt, der mit seinem anderen Ende am äußeren Umfang der Kolbenstange 30 befestigt ist, wie dies in der Fig.1 gezeigt ist. Der Faltenbalg 91 verhindert somit, daß Feuchtigkeit oder Schmutz in die von der Kolbenstange 30 beaufschlagte Zuspannvorrichtung 1 der Bremse eindringen kann. Die empfindlichen Lagerungsteile der Zuspannvorrichtung 1 sind somit sicher vor Korrosion geschützt. Bei herkömmlichen Zuspannvorrichtungen ist der Faltenbalg demgegenüber Teil des Bremszylinders, so daß immer dann, wenn dieser bei Wartungsarbeiten oder dergleichen demontiert ist, die Gefahr besteht, daß Schmutz oder Feuchtigkeit in die nunmehr offene Zuspannvorrichtung eindringt. Die erfindungsgemäße Anordnung des Faltenbalgs 90 bietet somit wesentliche Vorteile im Hinblick auf die Gewährleistung der Betriebssicherheit der Bremse.

Zwischen einer Bodenplatte 28 des Bremszylinders 200 und dem Kolbenteller 20 ist ferner eine Schraubenfeder 25 eingespannt, die dafür sorgt, daß der Kolbenteller 20 und damit auch die Kolbenstange 30 (wenn diese im nicht gezeigten montierten Zustand mit ihr gekoppelt ist) sowie die Membran 22 in ihre in der Fig.1 dargestellte Ausgangslage zurückgebracht werden, wenn keine Druckluft mehr zugeführt wird bzw. wenn das Feststell-Bremselement freigegeben wird.

Der das Bremszuspannelement bildende Drehhebel 50 ist in einem Halbschalenlager 12 der Zuspannvorrichtung 1 exzentrisch gelagert und verschiebt über eine Exzenterwelle 13 eine Traverse 14 in Richtung zu einer Bremsscheibe 2. Zwischen der Bremsscheibe 2 und dem unteren Ende der Traverse 14 ist eine Bremsbacke vorgesehen. Die Traverse 14 wird auf ihrer Unterseite von einer Feder 15 derart beaufschlagt, daß die Traverse 14 von der Bremsscheibe 2 weggedrückt wird; der Drehhebel 50 kehrt daher selbsttätig in seine in der Fig.1 gezeigte Ausgangslage zurück, wenn der Bremsdruck im Bremszylinder 200 abgebaut wird. Bezüglich näherer Einzelheiten hinsichtlich des genauen Aufbaus und der Wirkungsweise einer derartigen Zuspannvorrichtung wird im übrigen auf die eingangs genannte **DE 42 12 382 A1** der Anmelderin verwiesen.

Erfindungsgemäß ist die Kolbenstange 30 gelenkig und lösbar am Bremszuspannelement bzw. Bremshebel 50 befestigt. Zu diesem Zweck ist die Kolbenstange 30 an ihrem Ende halbkugelförmig ausgebildet und greift zur Bildung eines Kugelpfannengelenks in eine entsprechende halbkugelförmige Ausnehmung des Bremshebels 50 ein, wie aus Fig.1 unmittelbar ersichtlich ist, wobei die Kolbenstange 30 mittels eines Klemmbügels 60 am Bremshebel 50 lösbar befestigt ist. Der Klemmbügel 60 hat bei diesem Ausführungsbeispiel die Gestalt eines Federbügels, der in einer hier nicht näher gezeigten Weise sowohl mit dem Bremshebel 50 als auch mit dem Ansatz 21 des Kolbentellers 20 gelenkig und gleichzeitig lösbar verbunden ist. Mit dieser Maßnahme wird erreicht, daß sowohl die erfindungsgemäße Kopplung des Drehhebels 50 mit der Kolbenstange 30 als auch deren Kopplung mit dem Ansatz 21 mit ein und demselben Verbindungselement erfolgen kann, was einerseits die Montage und Demontage erleichtert und andererseits die Herstellungskosten senkt. Da der Federbügel 60 aufgrund seiner in Axialrichtung vorliegenden Elastizität in der Lage ist, durch Herstellungstoleranzen bedingte Ungenauigkeiten in den Längsabmessungen der Kolbenstange 30 und/oder des Ansatzes 21 des Kolbentellers 20 zu kompensieren, ist der Federbügel 60 auch insofern von Vorteil.

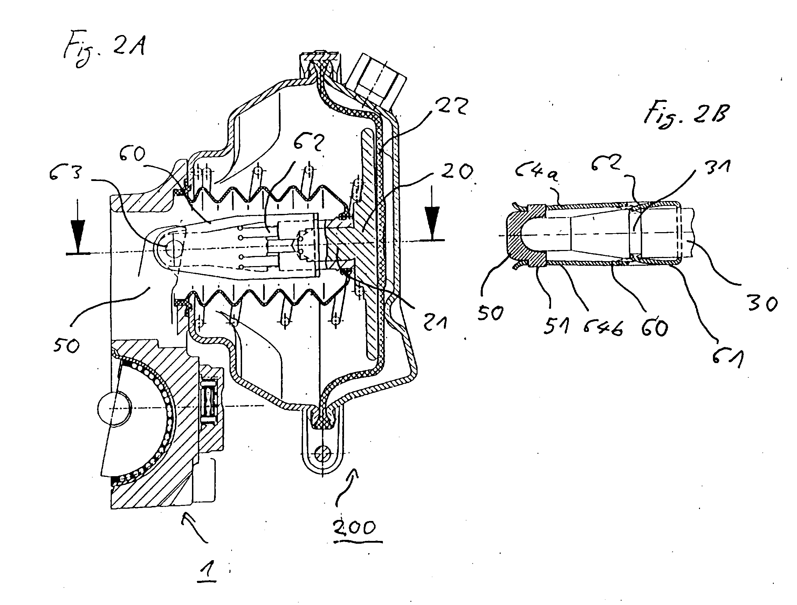

In den Figuren 2A und 2B ist ein zweites Ausführungsbeispiel der erfindungsgemäßen gelenkigen Befestigung der Kolbenstange 30 am Drehhebel 50 gezeigt. Wie insbesondere aus der vergrößerten Darstellung der Fig.2B ersichtlich ist, besteht der Klemmbügel bei diesem Ausführungsbeispiel aus einem hülsenartigen Teil, das in seinem oberen Bereich 61 die Kolbenstange 30 umfaßt und mit mehreren Federlaschen 62 in eine umlaufende Ausnehmung 31 der Kolbenstange 30 eingreift. Am unteren Ende besteht die Hülse 60 aus zwei seitlichen Laschen 64a und 64b, welche den Drehhebel 50 seitlich umfassen und mit Hilfe von in ihnen ausgebildeten Löchern 63 in stiftförmige Vorsprünge 51 eingreifen, die seitlich am Drehhebel 50 ausgebildet sind. Die Kolbenstange 30 ist daher am Drehhebel 50 in dessen Drehebene schwenkbar befestigt. Die Befestigung der Kolbenstange 30 am Drehhebel 50 gestaltet sich mit dieser Hülse besonders einfach: es ist lediglich erforderlich, die Kolbenstange 30 in die halbkugelförmige Ausnehmung des Drehhebels 50 einzusetzen und anschließend die Hülse 60 auf die Kolbenstange 30 aufzustecken, wobei die Laschen 64a und 64b etwas nach außen gedrückt und mit ihren Löchern 63 in die Vorsprünge 51 eingeführt werden; die Federlaschen 62 gleiten dabei ebenfalls in die umlaufende Ausnehmung 31 der Kolbenstange 30 und arretieren diese.

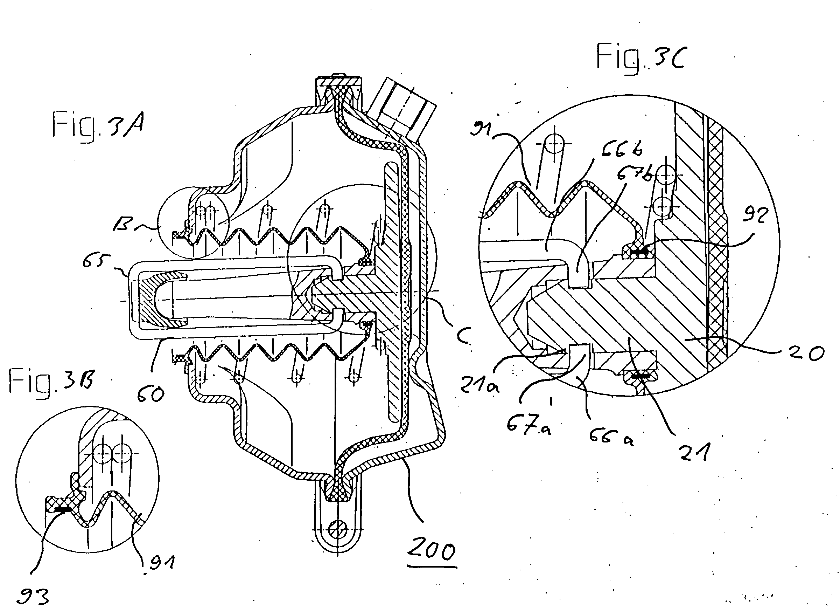

In den Figuren 3A bis 3C ist ein drittes Ausführungsbeispiel der erfindungsgemäßen gelenkigen Befestigung der Kolbenstange 30 am Drehhebel 50 gezeigt. Bei dieser Variante besteht der Klemmbügel 60 aus einem unteren Teil 65, das in geeigneter Weise gelenkig am Umfang des Drehhebels 50 sitzt und von dem zwei Federbügel 66a und 66b nach oben verlaufen, die mit Hilfe eines jeweiligen Hakens 67a bzw. 67b durch eine zugeordnete Bohrung in der Kolbenstange 30 eingeführt werden können und in einer entsprechenden Ausnehmung 21a des Ansatzes 21 des Kolbentellers 20 einrasten. Auf diese Weise wird eine äußerst elegante und preiswerte Befestigung geschaffen, mit der eine gleichzeitige Befestigung der Kolbenstange 30 und des Ansatzes 21 erzielt werden kann.

In den Figuren 3B und 3C ist auch die Befestigung des Faltenbalgs 91 an der Öffnung 90 des Gehäuses bzw. am Außenumfang der Kolbenstange 30 näher gezeigt. Wie aus den Zeichnungen ohne weiteres ersichtlich ist, sind in den unteren bzw. oberen Umfangsabschnitten des Faltenbalgs 91 umlaufende Spannelemente 93 bzw. 92 vorgesehen, die eine sichere Befestigung des Faltenbalgs 91 gestatten.

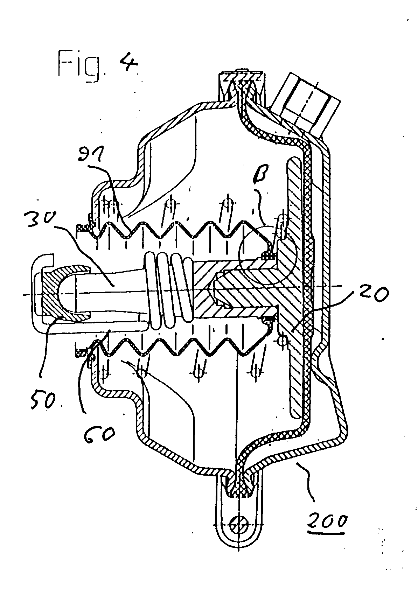

Bei dem in der Fig.4 gezeigten vierten Ausführungsbeispiel besteht der Klemmbügel 60 aus einem geeignet geformten Metallstab oder einem dicken Draht, der in seinem oberen Bereich nach Art einer Schraubenfeder verläuft und in seinem unteren Ende in einer Art Haken endet, der am Drehhebel 50 einrastet. Da der Schraubenfeder-Abschnitt die Kolbenstange 30 lediglich durch Federdruck arretiert, gestaltet sich die Montage und Demontage bei dieser Ausführungsform besonders einfach. Auch die Herstellung ist bei dieser Variante des Klemmbügels vergleichsweise preiswert.

Bezüglich weiterer Merkmale und Einzelheiten der Erfindung wird ausdrücklich auf die Offenbarung der Zeichnung verwiesen.

## Patentansprüche

1. Bremszuspannvorrichtung (1), insbesondere zum Zuspannen der Bremsscheiben (2) von mit einer Druckluft-Bremsanlage ausgestatteten Nutz- und Schienenfahrzeugen, mit einer Kolbenstange (30), die über Druckluft und/oder ein Feststell-Bremselement in einer vorgegebenen Betätigungsrichtung (X) im wesentlichen linear verstellbar ist und ein Bremszuspannelement (50) betätigt, das im Laufe seiner Betätigung eine von der Betätigungsrichtung (X) abweichende, etwa kreisausschnittförmige Bahn beschreibt, wobei ein Druckluftbremszylinder (2) vorgesehen ist, der einen in Betätigungsrichtung (X) beaufschlagbaren Kolbenteller (20) aufweist und wobei die Kolbenstange (30) gelenkig am Bremszuspannelement (50) befestigbar ist, **dadurch gekennzeichnet, daß** die Kolbenstange (30) lösbar am Kolbenteller (20) und mittels eines Klemmbügels (60) lösbar am Drehhebel (50) befestigbar ist.

2. Bremszuspannvorrichtung nach Anspruch 1, dadurch gekennzeichnet, daß die Kolbenstange (30) an ihrem Ende halbkugelförmig ausgebildet ist und zur Bildung eines Kugelpfannengelenks in eine entsprechende halbkugelförmige Ausnehmung des Bremszuspannelementes (50) eingreift.

3. Bremszuspannvorrichtung nach Anspruch 2, dadurch gekennzeichnet, daß der Klemmbügel als Federbügel (60) ausgebildet ist.

4. Bremszuspannvorrichtung nach Anspruch 2 oder 3, dadurch gekennzeichnet, daß an der Kolbenstange (30) oder am Bremszuspannelement (50) stiftförmige Vorsprünge (51) ausgebildet sind, in denen der Klemmbügel (60) schwenkbar gelagert ist, während im jeweils anderen Teil (d.h. Bremszuspannelement bzw. Kolbenstange) eine vorzugsweise umlaufend ausgebildete Ausnehmung (31) ausgebildet ist, in die ein als Klemmelement ausgebildetes Teil des Klemmbügels (60) einrastet.

5. Bremszuspannvorrichtung nach einem der Ansprüche 1 bis 4, dadurch gekennzeichnet, daß in der Kolbenstange (30) eine runde Ausnehmung (33) ausgebildet ist, in die ein stiftförmiger Ansatz (21) des Kolbentellers (20) einführbar ist.

6. Bremszuspannvorrichtung nach einem der Ansprüche 1 bis 5, dadurch gekennzeichnet, daß die Öffnung (90), über die die Kolbenstange (30) in das Gehäuse (11) der Bremszuspannvorrichtung (1) eintaucht, um das Bremszuspannelement (50) zu beaufschlagen, mittels eines Faltenbalgs (91) abgedichtet ist, der einerseits am Umfang der Öffnung (90) und andererseits an dem dem Bremszuspannelement (50) abgewandten Ende der Kolbenstange (30) befestigt ist.

## Claims

1. Brake actuator (1), in particular for actuating the brake discs (2) of commercial and rail vehicles equipped with a pneumatic brake installation, having a piston rod (30) which can be adjusted in a predetermined direction of actuation (X) in a substantially linear manner by means of compressed air and/or a locking brake element, and which actuates a brake actuation element (50) which describes a path shaped approximately like the sector of a circle and deviating from the direction of actuation (X) in the course of its actuation, wherein there is provided a pneumatic brake cylinder (2) which has a piston plate (20) which can be acted on in the actuation direction (X), and wherein the piston rod (30) can be secured in an articulated manner on the brake actuation element (50), characterised in that the piston rod (30) can be secured removably on the piston plate (20) and removably on the rotary lever (50) by means of a clamp strap (60).

2. Brake actuator according to claim 1, characterised in that the piston rod (30) is hemispherical at its end and engages into a corresponding hemispherical recess in the brake actuation element (50) to form a ball and socket joint.

3. Brake actuator according to claim 2, characterised in that the clamp strap is constructed as a spring clip (60).

4. Brake actuator according to claim 2 or 3,
characterised in that formed on the piston rod (30) or on the brake actuation element (50) are pin-shaped projections (51) in which the clamp strap (60) is pivotably mounted, whilst in the respective other part (i.e. the brake actuation element or the piston rod) there is formed a recess (31), preferably of circumferential construction, into which engages a part of the clamp strap (60) constructed as a clamping element.

5. Brake actuator according to one of claims 1 to 4, characterised in that a round recess (33) is formed in the piston rod (30) into which a pin-shaped extension (21) of the piston disc (20) can be inserted.

6. Brake actuator according to one of claims 1 to 5, characterised in that the aperture (90), through which the piston rod (30) dips into the housing (11) of the brake actuator (1) in order to act on the brake actuation element (50), is sealed by means of a folding bellows (91) which is secured on one side on the periphery of the aperture (90), and on the other side on the end of the piston rod (30) remote from the brake actuation element (50).

## Revendications

1. Moteur de frein (1), notamment pour l'application de disques (2) de frein de véhicules utilitaires et ferroviaires munis d'installation de freinage à air comprimé, comprenant une tige (30) de piston qui peut être déplacée sensiblement linéairement par de l'air comprimé et/ou un élément de frein de stationnement dans une direction (X) d'actionnement prescrite et qui actionne un élément (50) d'application du frein qui, au cours de son actionnement, décrit un trajet sensiblement en forme de secteur de cercle s'écartant de la direction (X) d'actionnement et il est prévu un cylindre (2) de frein à air comprimé qui comporte un disque (20) de piston pouvant être soumis à une force dans la direction (X) d'actionnement et la tige (30) de piston pouvant être articulée à l'élément (50) d'application du frein, caractérisé en ce que la tige (30) de piston peut être fixée de manière amovible au disque (20) de piston et au moyen d'un étrier (60) de serrage, de manière amovible, au levier (50) de rotation.

2. Moteur de frein suivant la revendication 1, caractérisé en ce que la tige (30) de piston est hémisphérique à son extrémité et, pour former une articulation à coussinet sphérique, pénètre dans un évidement hémisphérique correspondant de l'élément (50) d'application du frein.

3. Moteur de frein suivant la revendication 2, caractérisé en ce que l'étrier de serrage est constitué sous la forme d'un étrier (60) élastique.

4. Moteur de frein suivant la revendication 2 ou 3, caractérisé en ce qu'il est constitué sur la tige (30) de piston ou sur l'élément (50) d'application du frein des saillies (51) en forme de doigts, dans lesquelles l'étrier (60) de serrage est monté basculant, tandis que dans chaque autre partie (c'est à dire l'élément d'application du frein ou la tige de piston) il est constitué un évidement (31) de préférence faisant le tour et dans lequel pénètre la partie de l'étrier (60) de serrage constituée en élément de serrage.

5. Moteur de frein suivant l'une des revendications 1 à 4, caractérisé en ce qu'il est constitué dans la tige (30) de piston un évidement (33) rond, dans lequel peut être introduit un prolongement (21) en forme de doigt du disque (20) de piston.

6. Moteur de frein suivant l'une des revendications 1 à 5, caractérisé en ce que l'ouverture (90), par laquelle la tige (30) de piston pénètre dans l'enveloppe (11) du moteur de frein (1) pour soumettre à une force l'élément d'application du frein, est rendue étanche au moyen d'un soufflet (91) qui est fixé d'un côté au pourtour de l'ouverture (90) et de l'autre côté à l'extrémité de la tige (30) de piston qui est éloignée de l'élément (50) d'application du frein.
